# FASCICULE DE BREVET EUROPEEN

(11) **EP 3 494 061 B1**
(45) Date de publication et mention de la délivrance du brevet: **17.11.2021**
(21) Numéro de dépôt: 17754764.3
(22) Date de dépôt: 03.08.2017
(51) Int. Cl.: B65D 75/00, C08J 5/18

(54) **PROCÉDÉ D'EMBALLAGE A PARTIR DE POLYESTER THERMOPLASTIQUE SEMI-CRISTALLIN**
VERPACKUNGSVERFAHREN AUF DER BASIS VON SEMIKRISTALLINEM THERMOPLASTISCHEM POLYESTER
PACKAGING METHOD BASED ON A SEMI-CRYSTALLINE THERMOPLASTIC POLYESTER

(30) Priorité: 03.08.2016 FR 1657546
(43) Date de publication de la demande: 12.06.2019
(73) Titulaire: Roquette Frères, 62136 Lestrem (FR)
(72) Inventeur: AMEDRO, Hélène, Bethune 62400 (FR); SAINT-LOUP, René, Lomme 59160 (FR)
(74) Mandataire: Plasseraud IP
(86) Numéro de dépôt international: PCT/FR2017/052176
(87) Numéro de publication internationale: WO 2018/024992

(56) Documents cités:
- EP-A1- 2 857 433
- EP-A2- 2 500 373

## Description

### Domaine de l'invention

La présente invention se rapporte au domaine de l'emballage et notamment à un procédé d'emballage à partir de film thermo-rétractables fabriqués à base de polyester thermoplastique semi-cristallin comprenant au moins un motif 1,4 : 3,6-dianhydrohexitol.

### Arrière-plan technologique de l'invention

Les matières plastiques sont devenues incontournables pour la fabrication en série d'objets. En effet, leur caractère thermoplastique permet à ces matières d'être transformées à cadence élevée en toutes sortes d'objets.

Certains polyesters aromatiques thermoplastiques ont des propriétés thermiques leur permettant d'être utilisés directement pour la fabrication de matériaux. Ils comprennent des motifs diol aliphatique et diacide aromatique. Parmi ces polyesters aromatiques, on peut citer le polyéthylène téréphtalate (PET), qui est un polyester comprenant des motifs éthylène glycol et acide téréphtalique, servant par exemple à la fabrication de films.

Toutefois, pour certaines applications ou dans certaines conditions d'utilisation, il est nécessaire d'améliorer certaines propriétés et notamment la résistance au choc ou encore de tenue thermique. C'est ainsi que des PET modifiés glycol (PETg) ont été développés. Ce sont généralement des polyesters comprenant, en plus des motifs éthylène glycol et acide téréphtalique, des motifs cyclohexanediméthanol (CHDM). L'introduction de ce diol dans le PET lui permet d'adapter les propriétés à l'application visée, par exemple d'améliorer sa résistance au choc ou ses propriétés optiques.

D'autres PET modifiés ont également été développés en introduisant dans le polyester des motifs 1,4 : 3,6-dianhydrohexitol, notamment de l'isosorbide (PEIT). Ces polyesters modifiés présentent des températures de transition vitreuse plus élevées que les PET non modifiés ou les PETg comprenant du CHDM. En outre, les 1,4 : 3,6-dianhydrohexitols présentent l'avantage de pouvoir être obtenus à partir de ressources renouvelables telles que l'amidon. Des polyesters comprenant de l'isosorbide et de l'éthylène glycol sont décrits dans les documents EP2500373 et EP2857433.

Un problème de ces PEIT est qu'ils peuvent présenter des propriétés insuffisantes de résistance au choc. De plus, la température de transition vitreuse peut être insuffisante pour la fabrication de certains objets plastiques.

Pour améliorer les propriétés de résistance au choc des polyesters, il est connu de l'art antérieur d'utiliser des polyesters dont on a réduit la cristallinité. En ce qui concerne les polyesters à base d'isosorbide, on peut citer la demande US2012/0177854 qui décrit des polyesters comprenant des motifs acide téréphtalique et des motifs diols comprenant de 1 à 60% en moles d'isosorbide et de 5 à 99% de 1,4-cyclohexanediméthanol qui présentent des propriétés de résistance à l'impact améliorées. Comme indiqué dans la partie introductive de cette demande, il s'agit d'obtenir des polymères dont on élimine la cristallinité par l'ajout de comonomères, et donc ici par l'ajout de 1,4-cyclohexanediméthanol. Dans la partie exemples est décrite la fabrication de différents poly(ethylène-co-1,4-cyclohexanediméthylène-co-isosorbide) téréphtalates (PECIT) ainsi qu'également un exemple de poly(1,4-cyclohexanediméthylène-co-isosorbide) téréphtalate (PCIT).

On peut également noter que, tandis que les polymères de type PECIT ont fait l'objet de développements commerciaux, ce n'est pas le cas des PCIT. En effet leur fabrication était jusqu'ici considérée comme complexe, l'isosorbide présentant une faible réactivité comme diol secondaire. Yoon et al. (Synthesis and Characteristics of a Biobased High-Tg Terpolyester of Isosorbide, Ethylene Glycol, and 1,4-Cyclohexane Dimethanol: Effect of Ethylene Glycol as a Chain Linker on Polymerization, Macromolecules, 2013, 46, 7219-7231*)* ont ainsi montré que la synthèse de PCIT est bien plus difficile à réaliser que celle de PECIT. Ce document décrit l'étude de l'influence du taux d'éthylène glycol sur la cinétique de fabrication de PECIT.

Dans *Yoon et al.*, un PCIT amorphe (qui comprend par rapport à la somme des diols environ 29% d'isosorbide et 71% de CHDM), est fabriqué afin de comparer sa synthèse et ses propriétés avec celles des polymères de type PECIT. L'utilisation de températures élevées lors de la synthèse induit une dégradation thermique du polymère formé si on se réfère au premier paragraphe de la partie *Synthesis* de la page 7222, cette dégradation étant notamment liée à la présence des diols aliphatiques cycliques tels que l'isosorbide. De ce fait, *Yoon et al.* ont utilisé un procédé dans lequel la température de polycondensation est limitée à 270°C. Yoon et al. ont constaté que, même en augmentant le temps de polymérisation, le procédé ne permet pas non plus d'obtenir un polyester présentant une viscosité suffisante. Ainsi, sans ajout d'éthylène glycol, la viscosité du polyester reste limitée, ceci malgré l'utilisation de temps de synthèse prolongés.

Ainsi, malgré les modifications apportées aux PET, il existe toujours un besoin constant de nouveaux polyesters présentant des propriétés améliorées.

On connait du document US6126992 des objets fabriqués à partir de polymères ayant des motifs acide téréphtalique, des motifs éthylène glycol et des motifs isosorbide et éventuellement un autre diol (par exemple le 1,4-cyclohexanediméthanol). L'ensemble des polymères obtenus présentent ainsi des motifs éthylène glycol car il est largement admis que ces derniers sont nécessaires à l'incorporation de l'isosorbide et à l'obtention d'une température de transition vitreuse élevée. De plus, les exemples de préparation mis en œuvre ne permettent pas d'obtenir des polymères une composition en motif permettant de donner entière satisfaction dans la fabrication de films thermo-rétractables. En effet, l'exemple 1 décrit notamment la préparation d'un polymère comprenant 33,5% de motif éthylène glycol et 12,9% de motif isosorbide soit un ratio motif isosorbide/ motif éthylène glycol de 0,39 ce qui n'est pas convaincant, au-delà même du fait que le polymère contienne de l'éthylène glycol, pour la fabrication de films thermo-rétractables.

Le document US5958581 décrit des films en polyester fabriqués à partir d'un polymère ayant des motifs isosorbide, des motifs acide téréphtalique, et des motifs éthylène glycol. Les films ainsi fabriqués sont adaptés pour une utilisation notamment en tant qu'emballage alimentaire ou en tant qu'isolant.

L'utilisation de films thermo-rétractables est bien connue de l'industrie de l'emballage, ces derniers étant souvent utilisés pour emballer une multitude de produits, notamment alimentaires.

Par exemple, les produits à emballer peuvent être placés au sein d'un sac fabriqué à partir de films thermo-rétractables, puis après l'application d'un traitement thermique, le film se rétracte aboutissant ainsi à l'emballage dudit produit. Un tel sac est généralement constitué par un film polyester monocouche. Les films thermo-rétractables peuvent également être utilisés pour maintenir ensemble plusieurs produits, comme par exemple pour l'obtention de lots de produits. Lorsque le film est entouré sur le lot du produit, l'application d'un traitement thermique entraine la rétraction du film qui épouse ainsi la forme du lot et durcit ensuite au refroidissement.

Les polyesters utilisés à l'heure actuelle apportent des solutions pour la fabrication de film thermo-rétractable et permettent notamment de fournir des emballages offrant résistance et protection par adhérence étanche au produit. Cependant, il reste nécessaire de disposer de nouveaux polyesters aux propriétés améliorées qui permettent d'obtenir des films thermo-rétractables présentant une meilleure tenue thermique ainsi que des propriétés mécaniques telles que la contrainte au seuil et la tenue à la déchirure améliorées.

Le document US4971845 décrit des films laminés thermorétractables ayant une première couche en matériel thermoplastique thermorétractable et une seconde couche scellable et décrit également des sacs ou autre emballage produits à partir de ces films. La première couche peut être un polyester tel que le polyéthylène téréphtalate (PET) et la seconde peut être une polyoléfine telle que le polypropylène ou le polyéthylène, les deux couches ayant approximativement les mêmes propriétés de thermo-rétractation. Les films ainsi obtenus présentent une thermo-rétraction d'environ 50%.

Le document US6623821 décrit également des films thermo-rétractables à base de polyéthylène téréphtalate (PET) pour l'emballage. Le polyéthylène téréphtalate peut être un homopolymère ou un copolymère de PET. L'homopolymère de PET est un polymère dérivant de la polymérisation entre l'éthylène glycol et l'acide téréphtalique. Les films décrits peuvent être recouverts d'une couche de solvant permettant un scellage par traitement thermique ou peuvent être laminés à d'autres films.

Bien que des solutions existent, l'emballage est un domaine en constante évolution pour lequel il est nécessaire de fournir constamment des solutions alternatives présentant de meilleures propriétés par rapport aux solutions déjà présentes sur le marché.

Ainsi, il existe toujours un besoin de films thermo-rétractables présentant des propriétés améliorées afin d'obtenir des emballages toujours plus performants.

Il est donc du mérite de la Demanderesse d'avoir trouvé que cet objectif pouvait être atteint, contre toute attente, avec un polyester thermoplastique semi-cristallin à base notamment d'isosorbide et ne présentant pas d'éthylène glycol, alors qu'il était connu jusqu'à présent que ce dernier était indispensable pour l'incorporation dudit l'isosorbide.

En effet, le polyester thermoplastique semi-cristallin utilisé selon la présente invention, grâce à une viscosité et un ratio en motif particuliers, présente des propriétés améliorées pour une utilisation selon l'invention dans la fabrication de films thermo-rétractables.

### Résumé de l'invention

Un premier objet de l'invention concerne un procédé d'emballage comprenant les étapes suivantes :
a) Fourniture d'un polyester thermoplastique semi-cristallin comprenant au moins un motif 1,4 : 3,6-dianhydrohexitol (A), au moins un motif diol alicyclique (B) autre que les motifs 1,4 : 3,6-dianhydrohexitol (A), au moins un motif acide téréphtalique (C), dans lequel le ratio molaire (A)/[(A)+(B)] étant d'au moins 0,05
a) et d'au plus 0,30, ledit polyester étant exempt de motifs diol aliphatique non cyclique, et dont la viscosité réduite en solution (25°C ; phénol (50%m) : ortho-dichlorobenzène (50%m) ; 5 g/L de polyester) est supérieure à 50 mL/g,
b) Préparation d'un film thermo-rétractable à partir du polyester thermoplastique semi-cristallin obtenu à l'étape a),
c) Recouvrement d'un produit à l'aide du film thermo-rétractable obtenu à l'étape b),
d) Application d'un traitement thermique sur ledit produit recouvert.

Un second objet de l'invention concerne un emballage obtenu à partir d'un film thermo-rétractable fabriqué à base du polyester thermoplastique semi-cristallin tel que décrit ci-dessus.

Les polyesters thermoplastiques semi-cristallin selon l'invention offrent d'excellentes propriétés et permettent notamment d'obtenir des films thermorétractables présentant une meilleure tenue thermique et des propriétés mécaniques améliorées, lesdits films étant particulièrement adaptés pour la fabrication d'emballage.

### Description détaillée de l'invention

Un premier objet de l'invention concerne un procédé d'emballage de produits à partir de film thermo-rétractable fabriqué à base d'un polyester thermoplastique semi-cristallin, comprenant les étapes suivantes :
a) Fourniture d'un polyester thermoplastique semi-cristallin comprenant au moins un motif 1,4 : 3,6-dianhydrohexitol (A), au moins un motif diol alicyclique (B) autre que les motifs 1,4 : 3,6-dianhydrohexitol (A), au moins un motif acide téréphtalique (C), dans lequel le ratio molaire (A)/[(A)+(B)] étant d'au moins 0,05 et d'au plus 0,30, ledit polyester étant exempt de motifs diol aliphatique non cyclique, et dont la viscosité réduite en solution (25°C ; phénol (50%m) : ortho-dichlorobenzène (50%m) ; 5 g/L de polyester) est supérieure à 50 mL/g,
b) Préparation d'un film thermo-rétractable à partir du polyester thermoplastique semi-cristallin obtenu à l'étape a),
c) Recouvrement d'un produit à l'aide du film thermo-rétractable obtenu à l'étape b) ;
d) Application d'un traitement thermique sur ledit produit emballé.

Par « ratio molaire (A)/[(A)+(B)] » on entend le ratio molaire motifs 1,4 : 3,6-dianhydrohexitol (A) / somme des motifs 1,4 : 3,6-dianhydrohexitol (A) et des motifs diols alicycliques (B) autre que les motifs 1,4 : 3,6-dianhydrohexitol (A).

Le polyester thermoplastique semi-cristallin de l'étape a) de fourniture est donc exempt de motifs diol aliphatiques non cycliques.

Le terme « thermo-rétractable » désigne notamment la capacité d'un film à être orienté d'une manière lui permettant de se rétrécir dans le sens de la longueur et dans le sens transverse lorsqu'il est soumis à des contraintes thermiques.

Un diol aliphatique non cyclique peut être un diol aliphatique non cyclique linéaire ou ramifié. Il peut également être un diol aliphatique non cyclique saturé ou insaturé. Outre l'éthylène glycol, le diol aliphatique non cyclique linéaire saturé peut par exemple être le 1,3-propanediol, le 1,4-butanediol, le 1,5-pentanediol, le 1,6-hexanediol, le 1,8-octanediol et/ou le 1,10-decanediol. Comme exemple de diol aliphatique non cyclique ramifié saturé, on peut citer le 2-methyl-1,3-propanediol, le 2,2,4-trimethyl-1,3-pentanediol, le 2-ethyl-2-butyl-1,3-propanediol, le propylèneglycol et/ou le néopentylglycol. Comme exemple de diol aliphatique insaturé, on peut citer par exemple le cis-2-butene-1,4-diol. Selon l'invention, le polyester est exempt de motif diol aliphatique non cyclique et plus préférentiellement, il est exempt d'éthylène glycol.

Malgré la faible quantité de diol aliphatique non cyclique, et donc d'éthylène glycol, utilisé pour la synthèse, il est obtenu de manière surprenante un polyester thermoplastique semi-cristallin présentant une viscosité réduite en solution élevée et dans lequel l'isosorbide est particulièrement bien incorporé. Sans être lié par une quelconque théorie, ceci s'expliquerait par le fait que la cinétique de réaction de l'éthylène glycol est beaucoup plus élevée que celle du 1,4 : 3,6-dianhydrohexitol ce qui limite fortement l'intégration de ce dernier dans le polyester. Les polyesters en résultant présentent donc un faible taux d'intégration de 1,4 : 3,6-dianhydrohexitol et par conséquent une température de transition vitreuse relativement basse. Le monomère (A) est un 1,4 : 3,6-dianhydrohexitol peut être l'isosorbide, l'isomannide, l'isoidide, ou un de leurs mélanges. De préférence, le 1,4 : 3,6-dianhydrohexitol (A) est l'isosorbide.

L'isosorbide, l'isomannide et l'isoidide peuvent être obtenus respectivement par déshydratation de sorbitol, de mannitol et d'iditol. En ce qui concerne l'isosorbide, il est commercialisé par la Demanderesse sous le nom de marque POLYSORB® P.

Le diol alicyclique (B) est également appelé diol aliphatique et cyclique. Il s'agit d'un diol qui peut notamment être choisi parmi le 1,4-cyclohexanedimethanol, le 1,2-cyclohexanedimethanol, le 1,3-cyclohexanedimethanol ou un mélange de ces diols. Très préférentiellement le diol alicyclique (B) est le 1,4-cyclohexanedimethanol. Le diol alicyclique (B) peut être dans la configuration *cis*, dans la configuration *trans* ou peut être un mélange de diols en configuration *cis* et *trans.*

Le ratio molaire motifs 1,4 : 3,6-dianhydrohexitol (A) / somme des motifs 1,4 : 3,6-dianhydrohexitol (A) et des motifs diols alicycliques (B) autre que les motifs 1,4 : 3,6-dianhydrohexitol (A), soit (A)/[(A)+(B)], est d'au moins 0,05 et d'au plus 0,30. Avantageusement, ce ratio est d'au moins 0,1 et d'au plus 0,28, et tout particulièrement ce ratio est d'au moins 0,15 et d'au plus 0,25.

Un polyester thermoplastique semi-cristallin particulièrement adapté pour la préparation de films thermo-rétractables comprend :
- une quantité molaire de motifs 1,4 : 3,6-dianhydrohexitol (A) allant de 2,5 à 14 % mol ;
- une quantité molaire de motifs diol alicyclique (B) autre que les motifs 1,4 : 3,6-dianhydrohexitol (A) allant de 31 à 42,5 % mol ;
- une quantité molaire de motifs acide téréphtalique (C) allant de 45 à 55 % mol.

Les quantités en différents motifs dans le polyester peuvent être déterminées par RMN 1H ou par analyse chromatographique du mélange de monomères issus d'une méthanolyse ou d'une hydrolyse complète du polyester, de préférence par RMN ¹H.

L'homme de l'art peut aisément trouver les conditions d'analyse pour déterminer les quantités en chacun des motifs du polyester. Par exemple, à partir d'un spectre RMN d'un poly(1,4-cyclohexanedimethylène-co-isosorbide téréphtalate), les déplacements chimiques relatifs au 1,4-cyclohexanedimethanol sont compris entre 0,9 et 2,4 ppm et 4,0 et 4,5 ppm, les déplacements chimiques relatifs au cycle téréphtalate sont compris entre 7,8 et 8,4 ppm et les déplacements chimiques relatifs à l'isosorbide sont compris entre 4,1 et 5,8 ppm. L'intégration de chaque signal permet de déterminer la quantité de chaque motif du polyester.

Les polyesters thermoplastiques semi-cristallins utilisés selon l'invention pour l'étape b) de préparation de film thermo-rétractables présentent une température de fusion allant de 210 à 295°C, par exemple de 240 à 285 °C.

De plus, les polyesters thermoplastiques semi-cristallins présentent une température de transition vitreuse allant de 85 à 120°C, par exemple de 90 à 115°C. Les températures de transition vitreuse et de fusion sont mesurées par les méthodes classiques, notamment en utilisant la calorimétrie différentielle à balayage (DSC) en utilisant une vitesse de chauffe de 10°C/min. Le protocole expérimental est détaillé dans la partie exemples ci-après.

Avantageusement, le polyester thermoplastique semi-cristallin présente une chaleur de fusion supérieure à 10 J/g, de préférence supérieure à 20 J/g, la mesure de cette chaleur de fusion consistant à faire subir à un échantillon de ce polyester un traitement thermique à 170°C pendant 16 heures puis à évaluer la chaleur de fusion par DSC en chauffant l'échantillon à 10°C/min.

Le polyester thermoplastique semi-cristallin utilisé selon l'invention pour l'étape b) de préparation de film thermo-rétractables présente notamment une clarté L* supérieure à 40. Avantageusement, la clarté L* est supérieure à 55, de préférence supérieure à 60, tout préférentiellement supérieure à 65, par exemple supérieure à 70. Le paramètre L* peut être déterminé à l'aide d'un spectrophotomètre, en utilisant le modèle CIE Lab.

Enfin, la viscosité réduite en solution dudit polyester thermoplastique semi-cristallin est supérieure à 50 mL/g et de préférence inférieure à 150 mL/g, cette viscosité pouvant être mesurée à l'aide d'un viscosimètre capillaire Ubbelohde à 25°C dans un mélange équimassique de phénol et d'ortho-dichlorobenzène après dissolution du polymère à 130°C sous agitation, la concentration de polymère introduit étant de 5g/L.

Ce test de mesure de viscosité réduite en solution est, de par le choix des solvants et de la concentration des polymères utilisés, parfaitement adapté pour déterminer la viscosité du polymère visqueux préparé selon le procédé décrit ci-après.

Le caractère semi-cristallin des polyesters thermoplastiques utilisés selon la présente invention se caractérise lorsque que ces derniers, après un traitement thermique de 16h à 170°C, présentent des raies de diffraction aux rayons X ou un pic de fusion endothermique en Analyse Calorimétrique Différentielle à Balayage (DSC).

Le polyester thermoplastique semi-cristallin tel que précédemment défini présente bien des avantages pour la préparation de films thermo-rétractables.

En effet, grâce notamment au ratio molaire motifs 1,4 : 3,6-dianhydrohexitol (A) / somme des motifs 1,4 : 3,6-dianhydrohexitol (A) et des motifs diols alicycliques (B) autre que les motifs 1,4 : 3,6-dianhydrohexitol (A) d'au moins 0,05 et d'au plus 0,30 et à une viscosité réduite en solution supérieure à 50 mL/g et de préférence inférieure à 150 mL/g, les polyesters thermoplastiques semi-cristallin permettent de préparer des films thermo-rétractables présentant une meilleure tenue thermique et des propriétés mécaniques améliorées comparativement par exemple à des films thermo-rétractables fabriqués à partir de polyéthylène isosorbide téréphtalate (PEIT) classiques, ce qui est particulièrement intéressant pour l'obtention d'emballages aux propriétés améliorées.

La différence entre un film thermo-rétractable et une feuille réside dans l'épaisseur en tant que telle. Cependant aucun standard industriel ne définit précisément l'épaisseur en-delà de laquelle une feuille est considérée comme un film thermo-rétractable. Ainsi, selon la présente invention, un film thermo-rétractable est défini comme ayant une épaisseur inférieure à 250 µm. De préférence, les films thermo-rétractables ont une épaisseur de 5 µm à 250 µm, préférentiellement de 10 µm à 250 µm, par exemple 50 µm.

Les films thermo-rétractables préparés selon l'invention peuvent être directement préparés à partir de l'état fondu après polymérisation du polyester thermoplastique semi-cristallin fourni à l'étape a).

Selon une alternative, le polyester thermoplastique semi-cristallin peut être conditionné sous une forme facilement manipulable telle que des pellets ou des granulés avant d'être utilisé pour la préparation de films thermo-rétractables. D'une manière préférentielle, le polyester thermoplastique semi-cristallin est conditionné sous forme de granulés, lesdits granulés étant avantageusement séchés avant la transformation sous forme de films thermo-rétractables. Le séchage est réalisé de manière à obtenir des granulés présentant un taux d'humidité résiduelle inférieur à 300 ppm, préférentiellement inférieur à 200 ppm comme par exemple environ 180 ppm.

Les films thermo-rétractables préparés peuvent être des films thermo-rétractables monocouches ou des films thermo-rétractables multicouches obtenus par exemple par laminage de plusieurs couches dont au moins une d'entre elles contient un polyester thermoplastique semi-cristallin selon l'invention.

Les films thermo-rétractables préparés à partir du polyester thermoplastique semi-cristallin selon l'invention peuvent être obtenus par les méthodes connues de l'homme du métier comme par exemple l'extrusion par filière plate ou encore par filière annulaire (extrusion gonflage). D'une manière préférentielle, les films thermo-rétractables sont préparés par la méthode de l'extrusion par filière plate.

La préparation de films thermo-rétractables via l'extrusion par filière plate, dite « extrusion cast », consiste à étirer suivant deux axes une feuille plate en sortie d'extrudeuse. D'une manière particulièrement avantageuse, cette extrusion est réalisée par l'intermédiaire d'un procédé Stenter qui permet d'obtenir des films bi-orientés par biorientation séquentielle.

La préparation des films thermo-rétractables peut également être réalisée par extrusion-gonflage et consiste donc à extruder la matière en filière annulaire et à l'étirer simultanément dans les deux directions par l'action combinée du tirage et du soufflage. Les gaines tubulaires ainsi obtenues ont une épaisseur entre 10 et 300 µm et un périmètre qui va de quelques centimètres à plus de 10 mètres. L'axe d'extrusion peut-être vertical ou horizontal, avec des hauteurs de ballons pouvant atteindre plus de 20 mètres.

Selon cette méthode, un gaine mince est extrudée, pincée et gonflée avec de l'air qui remplit la gaine par l'axe de la tête filière. On procède ainsi à un premier étirage radial par gonflage. La gaine est ensuite refroidie, puis étirée longitudinalement par des rouleaux tireurs.

Selon un mode de réalisation particulier, un ou plusieurs polymères additionnels peuvent être utilisés pour l'étape b) de préparation du film thermo-rétractable.

Le polymère additionnel peut être choisi parmi les polyamides, les polyesters autres que le polyester selon l'invention, le polystyrène, les copolymères de styrène, les copolymères styrène-acrylonitrile, les copolymères styrène-acrylonitrile-butadiène, les polyméthacrylates de méthyle, les copolymères acryliques, les poly(éther-imides), les polyoxyde de phénylène tels que le polyoxyde de (2,6-diméthylphenylène), les polysulfate de phénylène, les poly (ester-carbonates), les polycarbonates, les polysulfones, les polysulfone ethers, les polyéther cétone et les mélanges de ces polymères.

Le polymère additionnel peut également être un polymère permettant d'améliorer les propriétés au choc du polymère, notamment les polyoléfines fonctionnelles telles que les polymères et copolymères d'éthylène ou de propylène fonctionnalisés, des copolymères cœur-écorce ou des copolymères à bloc.

Un ou plusieurs additifs peuvent également être ajoutés lors de la préparation du film thermo-rétractable à partir du polyester thermoplastique semi-cristallin afin de lui conférer des propriétés particulières.

Ainsi, à titre d'exemple d'additif, on peut citer les charges ou les fibres de nature organique ou inorganique, nanométriques ou non, fonctionnalisées ou non. Il peut s'agir de silices, de zéolithes, de fibres ou de billes de verre, d'argiles, de mica, de titanates, de silicates, de graphite, de carbonate de calcium, de nanotubes de carbone, de fibres de bois, de fibres de carbone, de fibres de polymère, de protéines, de fibres cellulosiques, de fibres ligno-cellulosiques et d'amidon granulaire non déstructuré. Ces charges ou fibres peuvent permettre d'améliorer la dureté, la rigidité ou la perméabilité à l'eau ou aux gaz.

L'additif peut également être choisi parmi des agents opacifiants, des colorants et des pigments. Ils peuvent être choisis parmi l'acétate de cobalt et les composés suivants : HS-325 Sandoplast® RED BB (qui est un composé porteur d'une fonction azo également connu sous le nom Solvent Red 195), HS-510 Sandoplast® Blue 2B qui est une anthraquinone, Polysynthren® Blue R, et Clariant® RSB Violet.

L'additif peut être également un agent de résistance aux UV comme par exemple des molécules type benzophénone ou benzotriazole, comme la gamme Tinuvin™ de BASF : tinuvin 326, tinuvin P ou le tinuvin 234 par exemple ou des amines encombrées comme la gamme Chimassorb™ de BASF : Chimassorb 2020, Chimasorb 81 ou Chimassorb 944 par exemple.

L'additif peut également être un agent ignifuge ou retardateur de flamme, comme par exemple des dérivés halogénés ou des retardateurs de flamme non halogénés (par exemple des dérivés phosphorés, tels que les Exolit® OP) ou comme la gamme des cyanurates mélaminés (par exemple les melapur™ : mélapur 200) ou encore des hydroxydes d'aluminium ou de magnésium.

Enfin, l'additif peut également être un agent antistatique ou encore un agent anti-block tel que des dérivés de molécules hydrophobes par exemple les Incroslip™ ou Incromol™ de Croda.

Le film thermo-rétractable comprenant le polyester thermoplastique semi-cristallin peut également subir des étapes de traitements additionnels permettant d'améliorer ses propriétés avant d'être utilisé pour l'étape c) de recouvrement.

A titre d'exemple de traitement additionnels on citera par exemple le traitement corona, le traitement par métallisation ou encore le traitement plasma.

Le traitement corona permet, via l'ionisation de l'air grâce à un arc électrique à haute fréquence et haute tension, de créer des microporosités sur la surface du film thermo-rétractable permettant notamment aux encres et aux colles de mieux adhérer. Ainsi traités, les films thermo-rétractables trouvent une application toute particulière pour l'emballage.

Le traitement par métallisation permet, via une évaporation d'aluminium sous vide, de condenser une couche d'aluminium de quelques nanomètres à quelques dizaines de nanomètres à la surface du film thermo-rétractable qui est alors refroidi pour éviter sa fusion. Ce traitement permet d'opacifier le film thermo-rétractable et de limiter ainsi la pénétration de la lumière ce qui est particulièrement avantageux pour éviter de dénaturer les propriétés d'un éventuel contenu.

Enfin, traitement plasma consiste à utiliser la technologie du dépôt de plasma atmosphérique afin de traiter l'extrême surface (quelques nm) du film thermo-rétractable et de permettre la réalisation d'un greffage sélectif de fonctions chimiques. Ce greffage sélectif peut ainsi procurer un effet anti-adhésif ou promoteur d'adhésion au film thermo-rétractable.

L'utilisation selon la présente invention de polyester thermoplastique semi-cristallin pour la préparation de films thermo-rétractables est particulièrement avantageuse.

En effet, les films thermo-rétractables ainsi préparés à partir de polyester thermoplastique semi-cristallin dont le ratio molaire motifs 1,4 : 3,6-dianhydrohexitol (A) / somme des motifs 1,4 : 3,6-dianhydrohexitol (A) et des motifs diols alicycliques (B) autre que les motifs 1,4 : 3,6-dianhydrohexitol (A) étant d'au moins 0,05 et d'au plus 0,30 et dont la viscosité réduite en solution supérieure à 50 mL/g tels que décrits ci-dessus, présentent des propriétés remarquables, à la fois du point de vue des propriétés mécaniques, de la qualité optique et également en terme de perméabilité aux gaz.

En effet, les films thermo-rétractables préparés présentent une amélioration de la tenue thermique se traduisant par une augmentation de la cadence de tirage de l'assemblages pour les films thermo-rétractables complexés ainsi que par une plage d'utilisation en température plus importante que les films thermo-rétractables usuels obtenus avec du PET.

Les films thermo-rétractables préparés présentent également une amélioration des propriétés mécaniques telles que le module de traction, la contrainte au seuil et tenue à la déchirure. Ces améliorations permettent d'offrir des solutions plus résistantes aussi bien pour l'emballage primaire, secondaire et tertiaire.

Le procédé d'emballage selon l'invention comprend ensuite une étape c) de recouvrement à l'aide du film thermo-rétractable préparé à l'étape b) précédente.

Cette étape de recouvrement peut être réalisée sur tout ou partie du produit à emballer et peut notamment être une étape d'emballage primaire, secondaire ou tertiaire.

L'emballage primaire constitue une enveloppe matérielle au contact direct du produit, que l'on appelle aussi le conditionnement. Des exemples d'emballages primaires sont notamment les sachets, les sacs, ou encore les couvercles sous forme de films de certains récipients alimentaires.

Ensuite, l'emballage secondaire entoure le conditionnement et joue un rôle physique permettant notamment de faciliter l'acheminement jusqu'au rayon de vente ou encore de constituer des unités de vente de taille plus grande. C'est le niveau d'emballage auquel est confronté le consommateur lorsqu'il effectue son choix en magasin. Ce niveau d'emballage permet par exemple de regrouper à l'aide d'un film thermo-rétractable les unités de ventes. Le film thermo-rétractable ainsi utilisé peut par exemple se présenter sous la forme d'un bandeau ou d'une banderole pouvant notamment présenter une transparence afin de voir le produit ou un ensemble de coloris visant à attirer le consommateur.

Enfin, l'emballage tertiaire regroupe par exemple les produits en unités de livraison et permet ainsi de faciliter et d'accélérer les opérations de manutention ou de protéger le produit lors du stockage.

Après l'étape de recouvrement, le procédé d'emballage selon l'invention comprend une étape de traitement thermique.

Cette étape de traitement thermique peut également être réalisée par les méthodes connues de l'homme du métier classiquement mises en œuvre pour la rétraction des films. Ainsi, l'homme du métier saura aisément quel traitement thermique doit être appliqué en fonction de l'emballage à obtenir (primaire, secondaire ou tertiaire).

Ainsi, à titre exemple, le traitement thermique peut consister à appliquer un fluide tel qu'un gaz ou une solution sur le film thermo-rétractable, ledit fluide étant à une température suffisante permettant la rétraction du film tout en restant cependant inférieure à la température de fusion de ce dernier. D'une manière préférentielle lorsqu'il s'agit d'un emballage primaire ou secondaire, le traitement thermique est réalisé par application d'une solution et notamment une solution de glycérol. Le traitement thermique est réalisé par trempage dans une solution chaude.

D'une manière avantageuse, et afin d'obtenir le meilleur taux de rétraction, la température du traitement thermique est égale à la température dans laquelle se trouvait le film thermo-rétractable à l'instant où les contraintes imprimées lors de la fabrication ont été figées par refroidissement.

L'application d'un traitement thermique selon l'invention permet d'obtenir un taux de rétraction des films compris entre 40% et 90%, particulièrement entre 65% et 85%, encore plus particulièrement entre 70% et 80%, comme par exemple 75%.

Le taux de rétraction peut être mesuré selon les étapes suivantes :
- Découpe du film en carré de 10cm*10cm,
- Mesure des dimensions pour vérification,
- Dépôt de l'échantillon dans un bain de glycérol à 140°C pendant 30 secondes,
- Mesures des dimensions en sortie du bain de glycérol et comparaison avec les mesures obtenue avant l'étape de dépôt.

Le taux de rétraction peut ainsi se définir comme la diminution de la largeur d'un carré de film lorsque ce dernier est porté à la température de rétraction, ladite diminution étant exprimée en pourcentage de la dimension initiale du carré.

Un deuxième objet de l'invention concerne un emballage obtenu à partir d'un film thermo-rétractable fabriqué à base du polyester thermoplastique semi-cristallin tel que décrit ci-dessus. Le film thermo-rétractable selon l'invention peut également comprendre un polymère additionnel et/ou un ou plusieurs additifs tels que définis ci-dessus.

Le polyester thermoplastique semi-cristallin fournit à l'étape a) du procédé d'emballage selon l'invention peut être préparé par un procédé de synthèse comprenant :
- une étape d'introduction dans un réacteur de monomères comprenant au moins un 1,4 : 3,6-dianhydrohexitol (A), au moins un diol alicyclique (B) autre que les 1,4 : 3,6-dianhydrohexitols (A) et au moins un acide téréphtalique (C), le ratio molaire ((A)+(B))/(C) allant de 1,05 à 1,5, lesdits monomères étant exempts de diol aliphatique non cyclique;
- une étape d'introduction dans le réacteur d'un système catalytique ;
- une étape de polymérisation desdits monomères pour former le polyester, ladite étape consistant en :
   ▪ un premier stade d'oligomérisation pendant lequel le milieu réactionnel est agité sous atmosphère inerte à une température allant de 265 à 280°C, avantageusement de 270 à 280°C, par exemple 275°C ;
   ▪ un second stade de condensation des oligomères pendant lequel les oligomères formés sont agités sous vide à une température allant de 278 à 300°C afin de former le polyester, avantageusement de 280 à 290°C, par exemple 285°C ;
- une étape de récupération du polyester thermoplastique semi-cristallin.

Ce premier stade du procédé se fait en atmosphère inerte, c'est-à-dire sous atmosphère d'au moins un gaz inerte. Ce gaz inerte peut notamment être du diazote. Ce premier stade peut se faire sous flux de gaz et il peut également se faire sous pression, par exemple à une pression comprise entre 1,05 et 8 bars.

De préférence, la pression va de 3 à 8 bars, tout préférentiellement de 5 à 7,5 bars, par exemple 6,6 bars. Dans ces conditions de pression préférées, on favorise la réaction de l'ensemble des monomères entre eux en limitant la perte de monomères lors de ce stade.

Préalablement au premier stade d'oligomérisation, une étape de désoxygénation des monomères est préférentiellement réalisée. Elle peut se faire par exemple une fois les monomères introduits dans le réacteur, en réalisant un vide puis en y introduisant un gaz inerte tel que l'azote. Ce cycle vide-introduction de gaz inerte peut être répété à plusieurs reprises, par exemple de 3 à 5 fois. De préférence, ce cycle vide-azote est réalisé à une température entre 60 et 80°C afin que les réactifs, et notamment les diols, soient totalement fondus. Cette étape de désoxygénation présente l'avantage d'améliorer les propriétés de coloration du polyester obtenu à la fin du procédé.

Le second stade de condensation des oligomères se fait sous vide. La pression peut diminuer au cours de ce second stade de manière continue en utilisant des rampes de baisse de pression, par paliers ou encore en utilisant une combinaison de rampes de baisse de pression et de paliers. De préférence, à la fin de ce second stade, la pression est inférieure à 10 mbar, tout préférentiellement inférieure à 1 mbar.

Le premier stade de l'étape de polymérisation a de préférence une durée allant de 20 minutes à 5 heures. Avantageusement, le second stade a une durée allant de 30 minutes à 6 heures, le début de ce stade consistant au moment où le réacteur est placé sous vide, c'est-à-dire à une pression inférieure à 1 bar.

Le procédé comprend en outre une étape d'introduction dans le réacteur d'un système catalytique. Cette étape peut se dérouler préalablement ou pendant l'étape de polymérisation décrite précédemment.

On entend par système catalytique, un catalyseur ou un mélange de catalyseurs, éventuellement dispersé(s) ou fixé(s) sur un support inerte.

Le catalyseur est utilisé dans des quantités adaptées pour obtenir un polymère de haute viscosité conformément à l'utilisation selon l'invention pour la fabrication de films thermo-rétractables.

On utilise avantageusement lors du stade d'oligomérisation un catalyseur d'estérification. Ce catalyseur d'estérification peut être choisi parmi les dérivés d'étain, de titane, de zirconium, d'hafnium, de zinc, de manganèse, de calcium, de strontium, des catalyseurs organiques comme l'acide para-toluène sulfonique (APTS), l'acide méthane sulfonique (AMS) ou un mélange de ces catalyseurs. A titre d'exemple de tels composés, on peut citer ceux donnés dans la demande US2011282020A1 aux paragraphes [0026] à [0029], et à la page 5 de la demande WO 2013/062408 A1.

De préférence, on utilise lors du premier stade de transestérification, un dérivé de zinc, ou un dérivé de manganèse d'étain ou de germanium.

A titre d'exemple de quantités massiques, on peut utiliser de 10 à 500 ppm de métal contenu dans le système catalytique lors du stade d'oligomérisation, par rapport à la quantité de monomères introduits.

En fin de transestérification, le catalyseur de la première étape peut être optionnellement bloqué par l'ajout d'acide phosphoreux ou d'acide phosphorique, ou alors comme dans le cas de l'étain (IV) réduit par des phosphites tels que le phosphite de triphenyle ou les phosphite des tris(nonylephenyle) ou ceux cités au paragraphe [0034] de la demande US2011282020A1.

Le second stade de condensation des oligomères peut optionnellement être réalisé avec l'ajout d'un catalyseur. Ce catalyseur est avantageusement choisi parmi les dérivés d'étain, préférentiellement d'étain, de titane, de zirconium, de germanium, d'antimoine, de bismuth, d'hafnium, de magnésium, de cérium, de zinc, de cobalt, de fer, de manganèse, de calcium, de strontium, de sodium, de potassium, d'aluminium, de lithium ou d'un mélange de ces catalyseurs. Des exemples de tels composés peuvent être par exemple ceux donnés dans le brevet EP 1882712 B1 aux paragraphes [0090] à [0094].

De préférence, le catalyseur est un dérivé d'étain, de titane, de germanium, d'aluminium ou d'antimoine.

A titre d'exemple de quantités massiques, on peut utiliser de 10 à 500 ppm de métal contenu dans le système catalytique lors du stade de condensation des oligomères, par rapport à la quantité de monomères introduits.

Tout préférentiellement, on utilise un système catalytique lors du premier stade et du second stade de polymérisation. Ledit système est avantageusement constitué d'un catalyseur à base d'étain ou d'un mélange de catalyseurs à base d'étain, de titane, de germanium et d'aluminium.

A titre d'exemple, on peut utiliser une quantité massique de 10 à 500 ppm de métal contenu dans le système catalytique, par rapport à la quantité de monomères introduits.

Selon le procédé de préparation, on utilise avantageusement un anti-oxydant lors de l'étape de polymérisation des monomères. Ces anti-oxydants permettent de réduire la coloration du polyester obtenu. Les anti-oxydants peuvent être des anti-oxydants primaires et/ou secondaires. L'anti-oxydant primaire peut être un phénol encombré stériquement tels que les composés Hostanox® 0 3, Hostanox® 0 10, Hostanox® 0 16, Ultranox® 210, Ultranox®276, Dovernox® 10, Dovernox® 76, Dovernox® 3114, Irganox® 1010, Irganox® 1076 ou un phosphonate tel que l'Irgamod® 195. L'anti-oxydant secondaire peut être des composés phosphorés trivalents tels que Ultranox® 626, Doverphos® S-9228, Hostanox® P-EPQ, ou l'Irgafos 168.

Il est également possible d'introduire, comme additif de polymérisation dans le réacteur, au moins un composé susceptible de limiter les réactions parasites d'éthérification tel que l'acétate de sodium, le tétraméthylammonium hydroxyde ou le tétraéthylammonium hydroxyde.

Enfin, le procédé comprend une étape de récupération du polyester à l'issue de l'étape de polymérisation. Le polyester thermoplastique semi-cristallin ainsi récupéré peut ensuite être mis en forme tel que décrit précédemment.

Selon une variante du procédé de synthèse, une étape d'augmentation de masse molaire est réalisée après l'étape de récupération du polyester thermoplastique semi-cristallin.

L'étape d'augmentation de masse molaire est réalisée par post-polymérisation et peut consister en une étape de polycondensation à l'état solide (PCS) du polyester thermoplastique semi-cristallin ou en une étape d'extrusion réactive du polyester thermoplastique semi-cristallin en présence d'au moins un allongeur de chaîne.

Ainsi, selon une première variante du procédé de fabrication, l'étape de post-polymérisation est réalisée par PCS.

La PCS est généralement réalisée à une température comprise entre la température de transition vitreuse et la température de fusion du polymère. Ainsi, pour réaliser la PCS, il est nécessaire que le polymère soit semi-cristallin. De préférence, ce dernier présente une chaleur de fusion supérieure à 10 J/g, de préférence supérieure à 20 J/g, la mesure de cette chaleur de fusion consistant à faire subir à un échantillon de ce polymère de viscosité réduite en solution plus faible un traitement thermique à 170°C pendant 16 heures puis à évaluer la chaleur de fusion par DSC en chauffant l'échantillon à 10 K/min.

Avantageusement, l'étape de PCS est réalisée à une température allant de 190 à 280°C, de préférence allant de 200 à 250°C, cette étape devant impérativement être réalisée à une température inférieure à la température de fusion du polyester thermoplastique semi-cristallin.

L'étape de PCS peut se faire en atmosphère en inerte, par exemple sous azote ou sous argon ou sous vide.

Selon une deuxième variante du procédé de fabrication, l'étape de post-polymérisation est réalisée par extrusion réactive du polyester thermoplastique semi-cristallin en présence d'au moins un allongeur de chaîne.

L'allongeur de chaîne est un composé comprenant deux fonctions susceptibles de réagir, en extrusion réactive, avec des fonctions, alcool, acide carboxylique et/ou ester d'acide carboxylique du polyester thermoplastique semi-cristallin. L'allongeur de chaîne peut par exemple être choisi parmi les composés comprenant deux fonctions isocyanate, isocyanurate, lactame, lactone, carbonate, époxy, oxazoline et imide, lesdites fonctions pouvant être identiques ou différentes. L'allongement de chaîne du polyester thermoplastique peut être effectué dans tous les réacteurs aptes à mélanger un milieu très visqueux avec une agitation suffisamment dispersive pour assurer une bonne interface entre la matière fondue et le ciel gazeux du réacteur. Un réacteur particulièrement adapté à cette étape de traitement est l'extrusion.

L'extrusion réactive peut être réalisée dans une extrudeuse de tout type, notamment une extrudeuse mono-vis, une extrudeuse bi-vis co-rotatives ou une extrudeuse bi-vis contrarotatives. Toutefois, on préfère réaliser cette extrusion réactive en utilisant une extrudeuse co-rotative.

L'étape d'extrusion réactive peut se faire en :
- introduisant le polymère dans l'extrudeuse de manière à faire fondre ledit polymère ;
- puis introduisant dans le polymère fondu l'allongeur de chaîne ;
- puis faisant réagir dans l'extrudeuse le polymère avec l'allongeur de chaîne ;
- puis récupérant le polyester thermoplastique semi-cristallin obtenu à l'étape d'extrusion.

Lors de l'extrusion, la température à l'intérieur de l'extrudeuse est réglée de manière à être supérieure à la température de fusion du polymère. La température à l'intérieur de l'extrudeuse peut aller de 150°C à 320°C.

Le polyester thermoplastique semi-cristallin obtenu après l'étape d'augmentation de masse molaire est récupéré puis peut être mis en forme tel que décrit précédemment avant de subir l'étape de préparation de film thermo-rétractable.

L'invention sera mieux comprise à l'aide des exemples et figures ci-après qui se veulent purement illustratifs et ne limitent en rien la portée de la protection.

### Exemple

Les propriétés des polymères ont été étudiées avec les techniques suivantes :

### Viscosité réduite en solution

La viscosité réduite en solution est évaluée à l'aide d'un viscosimètre capillaire Ubbelohde à 25°C dans un mélange équimassique de phénol et d'ortho-dichlorobenzène après dissolution du polymère à 130°C sous agitation, la concentration de polymère introduit étant de 5g/L.

### DSC

Les propriétés thermiques des polyesters ont été mesurées par calorimétrie différentielle à balayage (DSC) : L'échantillon est tout d'abord chauffé sous atmosphère d'azote dans un creuset ouvert de 10 à 320°C (10°C.min-1), refroidi à 10°C (10°C.min-1) puis réchauffé à 320°C dans les mêmes conditions que la première étape. Les températures de transition vitreuse ont été prises au point médian (en anglais mid-point) du second chauffage. Les températures de fusion éventuelles sont déterminées sur le pic endothermique (début du pic (en anglais, onset)) au premier chauffage.

De même la détermination de l'enthalpie de fusion (aire sous la courbe) est réalisée au premier chauffage.

Pour les exemples illustratifs présentés ci-dessous les réactifs suivants ont été utilisés : 1,4-Cyclohexane dimethanol (pureté 99%, mélange d'isomères cis et trans)
Isosorbide (pureté >99,5%) Polysorb® P de Roquette Frères
Acide téréphtalique (pureté 99+%) de Acros
Irganox® 1010 de BASF AG
Dibutylétain oxyde (pureté 98%) de Sigma Aldrich

### Fourniture d'un polyester thermoplastique semi-cristallin et préparation d'un film thermo-rétractable pour l'emballage.

Deux polyesters thermoplastiques **P1** et **P2** ont été préparés.

Le premier polyester thermoplastique semi-cristallin **P1** a été préparé pour une utilisation selon l'invention avec notamment un ratio molaire motifs 1,4 : 3,6-dianhydrohexitol (A) / somme des motifs 1,4 : 3,6-dianhydrohexitol (A) et des motifs diols alicycliques (B) autre que les motifs 1,4 : 3,6-dianhydrohexitol (A) d'au moins 0,05 et d'au plus 0,30.

Le second polyester **P2** est un polyester servant de comparatif et présente ainsi un ratio molaire [A]/([A]+[B]) de 0,44.

### A : Polymérisation du polyester thermoplastique semi-cristallin P1.

Ainsi, dans un réacteur de 7,5L sont ajoutés 1432 g (9,9 mol) de 1,4-cyclohexanedimethanol, 484 g (3,3 mol) d'isosorbide, 2000 g (12,0 mol) d'acide téréphtalique, 1,65 g d'Irganox 1010 (anti-oxydant) et 1,39 g de dibutylétainoxyde (catalyseur). Pour extraire l'oxygène résiduel des cristaux d'isosorbide, 4 cycles vide-azote sont effectués une fois la température du milieu réactionnel comprise entre 60 et 80°C. Le mélange réactionnel est ensuite chauffé à 275°C (4°C/min) sous 6,6 bars de pression et sous agitation constante (150 tr/min) jusqu'à obtenir un taux d'estérification de 87%. (Estimé à partir de la masse de distillat collectée). Puis, la pression est réduite à 0,7 mbar en 90 minutes selon une rampe logarithmique et la température amenée à 285°C.

Ces conditions de vide et de température ont été maintenues jusqu'à obtenir une augmentation de couple de 12,1 Nm par rapport au couple initial.

Enfin, un jonc de polymère est coulé par la vanne de fond du réacteur, refroidi dans un bac d'eau thermo-régulé à 15°C et découpé sous forme de granulés d'environ 15 mg.

La résine ainsi obtenue a une viscosité réduite en solution de 80.1 mL/g⁻¹.

L'analyse par RMN ¹H du polyester montre que le polyester final contient 17 mol% d'isosorbide par rapport aux diols.

En ce qui concerne les propriétés thermiques, le polymère présente une température de transition vitreuse de 96°C, une température de fusion de 253°C avec une enthalpie de fusion de 23,2J/g.

Les granulés sont ensuite utilisés dans une étape de post condensation à l'état solide.

Pour ce faire, les granulés sont préalablement cristallisés pendant 2h en étuve sous vide à 170°C.

L'étape de post condensation en phase solide est ensuite réalisée sur 10 kg de ces granulés durant 20h à 210°C sous flux d'azote (1500 l/h) pour augmenter la masse molaire. La résine après condensation en phase solide présente une viscosité réduite en solution de 103,4 mL.g.

### A' : Polymérisation du polyester thermoplastique P2.

Le polyester **P2** a été préparé selon le même protocole que **P1** à l'exception de l'étape de post condensation en phase solide.

Les quantités utilisées en composés sont détaillées dans le tableau 1 ci-après :

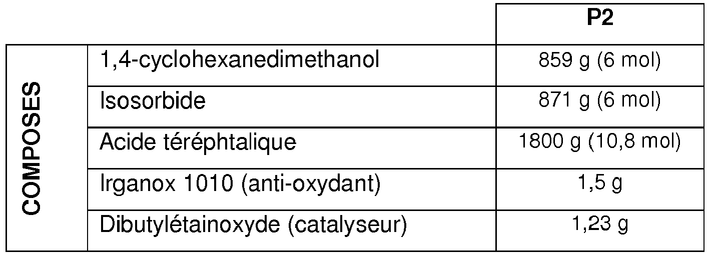

La résine ainsi obtenue avec le polyester **P2** a une viscosité réduite en solution de 54,9 mL/g.

L'analyse par RMN ¹H du polyester montre que le polyester **P2** final contient 44 mol% d'isosorbide par rapport aux diols. En ce qui concerne les propriétés thermiques, le polyester **P2** présente une température de transition vitreuse de **125**°C, et ne présente pas de pic de fusion endothermique en analyse calorimétrique différentielle à balayage même après un traitement thermique de 16h à 170°C ce qui indique son caractère amorphe.

### B : Mise en forme

Les granulés du polyester **P1** et **P2** obtenus aux étapes A et A' de polymérisation sont séchés sous vide à 150°C pour **P1** et 110°C pour **P2** afin d'atteindre des taux d'humidité résiduelle inférieurs à 300 ppm, dans cet exemple, la teneur en eau des granulés est de 130 ppm pour le polyester **P1** et de 170 ppm pour le polyester **P2.**

Les granulés maintenus en atmosphère sèche sont alors introduits dans la trémie de l'extrudeuse.

L'extrudeuse utilisée est une extrudeuse Collin équipée d'une filière plate, l'ensemble est complété par une calandreuse. Les paramètres d'extrusion sont regroupés dans le tableau 2 ci-dessous :

| Paramètres | Unités | Valeurs |
|---|---|---|
| Température (alim -> filière) | °C | 250/265/275/275/280 (**P1**) |
| | | 220/235/245/245/250 (**P2**) |
| Vitesse de rotation de la vis | rpm | 80 |
| Température des rouleaux | °C | 40 |

Les feuilles ainsi extrudées à partir du polyester **P1** et **P2** présentent une épaisseur de 2 mm.

Les feuilles sont alors découpées en carrés de dimension 11,5x11,5 cm puis, à l'aide d'une machine d'étirage Karo IV de marque Brückner, les découpes des feuilles sont étirées en deux directions en procédant à une température de 140°C avec un taux d'étirage de 2,8x2,8 et en un temps de 2 secondes dans les deux directions. On obtient ainsi un film bi-orienté thermo-rétractable.

### C : Traitement thermique

Des carrés de 10x10 cm sont découpés dans les films obtenus à l'étape précédente de mise en forme et plongés dans un bain de glycérol pendant 30 secondes à 140°C.

Les films obtenus à partir du polyester thermoplastique semi-cristallin **P1** présentent un taux de rétraction de 75% alors que le film obtenu à partir du polyester comparatif **P2** ne se rétracte pas.

Ainsi, les films fabriqués à partir de polyester thermoplastique semi-cristallin avec notamment un ratio molaire motifs 1,4 : 3,6-dianhydrohexitol (A) / somme des motifs 1,4 : 3,6-dianhydrohexitol (A) et des motifs diols alicycliques (B) autre que les motifs 1,4 : 3,6-dianhydrohexitol (A) d'au moins 0,05 et d'au plus 0,30 selon l'invention, présentent des propriétés de rétraction particulièrement avantageuse et sont dit thermo-rétractables.

Les films thermo-rétractables fabriqués selon l'invention trouvent donc une application toute particulière dans le domaine de l'emballage.

## Revendications

1. Procédé d'emballage de produits à partir de film thermo-rétractable fabriqué à base du polyester thermoplastique semi-cristallin comprenant les étapes suivantes :
a) Fourniture d'un polyester thermoplastique semi-cristallin comprenant au moins un motif 1,4 : 3,6-dianhydrohexitol (A), au moins un motif diol alicyclique (B) autre que les motifs 1,4 : 3,6-dianhydrohexitol (A), au moins un motif acide téréphtalique (C), dans lequel le ratio molaire (A)/[(A)+(B)] est d'au moins 0,05 et d'au plus 0,30, ledit polyester étant exempt de motifs diol aliphatique non cyclique, et dont la viscosité réduite en solution (25°C ; phénol (50%m) : ortho-dichlorobenzène (50%m) ; 5 g/L de polyester) est supérieure à 50 mL/g, .
b) Préparation d'un film thermo-rétractable à partir du polyester thermoplastique semi-cristallin obtenu à l'étape a),
c) Recouvrement d'un produit à l'aide du film thermo-rétractable obtenu à l'étape b),
d) Application d'un traitement thermique sur ledit produit emballé.

2. Procédé d'emballage selon la revendication 1, **caractérisé en ce que** l'étape b) de préparation est réalisée par la méthode de l'extrusion cast, et notamment par le procédé Stenter.

3. Procédé d'emballage selon l'une quelconque des revendications 1 ou 2, **caractérisé en ce qu'**il comprend avant l'étape c) de recouvrement, une étape de traitement additionnel du film thermo-rétractable préparé à l'étape b).

4. Procédé d'emballage selon la revendication 3, **caractérisé en ce que** le traitement additionnel est un traitement corona, un traitement par métallisation ou un traitement plasma.

5. Procédé d'emballage selon l'une quelconque des revendications 1 à 4, **caractérisé en ce que** l'étape d) d'application d'un traitement thermique est réalisée par trempage dans une solution chaude.

6. Procédé d'emballage selon l'une quelconque des revendications 1 à 5, **caractérisé en ce que** le diol alicyclique (B) est un diol choisi parmi le 1,4-cyclohexanedimethanol, le 1,2-cyclohexanedimethanol, le 1,3-cyclohexanedimethanol ou un mélange de ces diols, très préférentiellement le 1,4-cyclohexanedimethanol

7. Procédé d'emballage selon l'une quelconque des revendications 1 à 6, **caractérisé en ce que** le 1,4 : 3,6-dianhydrohexitol (A) est l'isosorbide.

8. Procédé d'emballage selon l'une quelconque des revendications 1 à 7, **caractérisé en ce que** le ratio molaire (motif 3,6-dianhydrohexitol (A) + motif diol alicyclique (B) autre que les motifs 1,4 : 3,6-dianhydrohexitol (A))/( motif acide téréphtalique (C)) est de 1,05 à 1,5.

9. Procédé d'emballage selon l'une quelconque des revendications 1 à 8, **caractérisé en ce que** le film thermo-rétractable présente une épaisseur de 10 µm à 250 µm.

10. Procédé d'emballage selon l'une quelconque des revendications 1 à 9, **caractérisé en ce que** le film thermo-rétractable comprend un ou plusieurs polymères additionnels et/ou un ou plusieurs additifs.

11. Emballage obtenu à partir d'un film thermo-rétractable fabriqué à base du polyester thermoplastique semi-cristallin comprenant au moins un motif 1,4 : 3,6-dianhydrohexitol (A), au moins un motif diol alicyclique (B) autre que les motifs 1,4 : 3,6-dianhydrohexitol (A), au moins un motif acide téréphtalique (C), dans lequel le ratio molaire (A)/[(A)+(B)] est d'au moins 0,05 et d'au plus 0,30, ledit polyester étant exempt de motifs diol aliphatique non cyclique, et dont la viscosité réduite en solution (25°C ; phénol (50%m) : ortho-dichlorobenzène (50%m) ; 5 g/L de polyester) est supérieure à 50 mL/g.

## Patentansprüche

1. Verfahren zum Verpacken von Produkten mit einer wärmeschrumpfbaren Folie, hergestellt auf Basis eines teilkristallinen thermoplastischen Polyesters, umfassend die folgenden Schritte:
a) Bereitstellen eines teilkristallinen thermoplastischen Polyesters umfassend mindestens eine 1,4 : 3,6-Dianhydrohexitol-Einheit (A), mindestens eine alicyclische Diol-Einheit (B), die sich von den 1,4 : 3,6-Dianhydrohexitol-Einheiten (A) unterscheidet, mindestens eine Terephthalsäure-Einheit (C), wobei das Molverhältnis (A)/[(A) + (B)] wenigstens 0,05 und höchstens 0,30 beträgt, wobei der Polyester frei von nicht-cyclischen aliphatischen Diol-Einheiten ist und wobei die reduzierte Viskosität in Lösung (25°C; Phenol (50 Gew.%) : ortho-Dichlorbenzol (50 Gew.%); 5 g/l Polyester) größer als 50 ml/g ist,
b) Herstellen einer wärmeschrumpfbaren Folie aus dem in Schritt a) erhaltenen teilkristallinen thermoplastischen Polyester,
c) Bedecken eines Produkts unter Verwendung der in Schritt b) erhaltenen wärmeschrumpfbaren Folie,
d) Anwenden einer Wärmebehandlung auf das verpackte Produkt.

2. Verfahren zum Verpacken nach Anspruch 1, **dadurch gekennzeichnet, dass** der Herstellungsschritt b) nach dem Gießextrusionsverfahren und insbesondere nach dem Stenter-Verfahren durchgeführt wird.

3. Verfahren zum Verpacken nach einem der Ansprüche 1 oder 2, **dadurch gekennzeichnet, dass** es vor dem Schritt c) des Abdeckens einen Schritt einer zusätzlichen Behandlung der in Schritt b) hergestellten wärmeschrumpfbaren Folie umfasst.

4. Verfahren zum Verpacken nach Anspruch 3, **dadurch gekennzeichnet, dass** die zusätzliche Behandlung eine Koronabehandlung, eine Metallisierungsbehandlung oder eine Plasmabehandlung ist.

5. Verfahren zum Verpacken nach einem der Ansprüche 1 bis 4, **dadurch gekennzeichnet, dass** der Schritt d) des Anwendens einer Wärmebehandlung durch Eintauchen in eine heiße Lösung durchgeführt wird.

6. Verfahren zum Verpacken nach einem der Ansprüche 1 bis 5, **dadurch gekennzeichnet, dass** das alicyclische Diol (B) ein Diol ist, ausgewählt aus 1,4-Cyclohexandimethanol, 1,2-Cyclohexandimethanol, 1,3-Cyclohexandimethanol oder einer Mischung dieser Diole, sehr bevorzugt 1,4-Cyclohexandimethanol.

7. Verfahren zum Verpacken nach einem der Ansprüche 1 bis 6, **dadurch gekennzeichnet, dass** das 1,4 : 3,6-Dianhydrohexitol (A) Isosorbid ist.

8. Verfahren zum Verpacken nach einem der Ansprüche 1 bis 7, **dadurch gekennzeichnet, dass** das Molverhältnis (3,6-Dianhydrohexitol-Einheit (A) + alicyclische Diol-Einheit (B), die sich von den 1,4 : 3,6-Dianhydrohexitol-Einheiten (A) unterscheidet) / (Terephthalsäureeinheit (C)) von 1,05 bis 1,5 beträgt.

9. Verfahren zum Verpacken nach einem der Ansprüche 1 bis 8, **dadurch gekennzeichnet, dass** die wärmeschrumpfbare Folie eine Dicke von 10 µm bis 250 µm aufweist.

10. Verfahren zum Verpacken nach einem der Ansprüche 1 bis 9, **dadurch gekennzeichnet, dass** die wärmeschrumpfbare Folie ein oder mehrere zusätzliche Polymere und/oder einen oder mehrere Additive umfasst.

11. Verpackung, erhalten aus einer wärmeschrumpfbaren Folie hergestellt auf Basis des teilkristallinen thermoplastischen Polyesters, umfassend mindestens eine 1,4 : 3,6-Dianhydrohexitol-Einheit (A), mindestens eine alicyclische Diol-Einheit (B), die sich von den 1,4 : 3,6-Dianhydrohexitol-Einheiten (A) unterscheidet, mindestens eine Terephthalsäure-Einheit (C), wobei das Molverhältnis (A)/[(A) + (B)] wenigstens 0,05 und höchstens 0,30 beträgt, wobei der Polyester frei von nicht-cyclischen aliphatischen Diol-Einheiten ist und wobei die reduzierte Viskosität in Lösung (25°C; Phenol (50 Gew.%) : ortho-Dichlorbenzol (50 Gew.%); 5 g/l Polyester) größer als 50 ml/g ist.

## Claims

1. A process for packaging products using heat-shrinkable film produced from the semicrystalline thermoplastic polyester, comprising the following steps:
a) providing a semicrystalline thermoplastic polyester comprising at least one 1,4:3,6-dianhydrohexitol unit (A), at least one alicyclic diol unit (B) other than the 1,4:3,6-dianhydrohexitol units (A), at least one terephthalic acid unit (C), wherein the (A)/[(A)+(B)] molar ratio is at least 0.05 and at most 0.30, said polyester not containing any aliphatic non-cyclic diol units, and the reduced solution viscosity (25°C; phenol (50%m): ortho-dichlorobenzene (50%m); 5 g/l of polyester) of said polyester being greater than 50 ml/g;
b) preparing a heat-shrinkable film from the semicrystalline thermoplastic polyester obtained in step a),
c) covering a product by means of the heat-shrinkable film obtained in step b),
d) applying a heat treatment to said packaged product.

2. The packaging process as claimed in claim 1, **characterized in that** the preparation step b) is carried out by the cast extrusion method, and in particular by the Stenter process.

3. The packaging process as claimed in either one of claims 1 and 2, **characterized in that** it comprises, before the covering step c), a step of additional treatment of the heat-shrinkable film prepared in step b).

4. The packaging process as claimed in claim 3, **characterized in that** the additional treatment is a corona treatment, a metallization treatment or a plasma treatment.

5. The packaging process as claimed in any one of claims 1 to 4, **characterized in that** the step d) of applying a heat treatment is carried out by dipping in a hot solution.

6. The packaging process as claimed in any one of claims 1 to 5, **characterized in that** the alicyclic diol (B) is a diol chosen from 1,4-cyclohexanedimethanol, 1,2-cyclohexanedimethanol, 1,3-cyclohexanedimethanol or a mixture of these diols, very preferentially 1,4-cyclohexanedimethanol.

7. The packaging process as claimed in any one of claims 1 to 6, **characterized in that** the 1,4:3,6-dianhydrohexitol (A) is isosorbide.

8. The packaging process as claimed in any one of claims 1 to 7, **characterized in that** the (3,6-dianhydrohexitol unit (A) + alicyclic diol unit (B) other than the 1,4:3,6-dianhydrohexitol units (A))/(terephthalic acid unit (C)) molar ratio is from 1.05 to 1.5.

9. The packaging process as claimed in any one of claims 1 to 8, **characterized in that** the heat-shrinkable film has a thickness of from 10 µm to 250 µm.

10. The packaging process as claimed in any one of claims 1 to 9, **characterized in that** the heat-shrinkable film comprises one or more additional polymers and/or one or more additives.

11. A packaging obtained using a heat-shrinkable film produced from the semicrystalline thermoplastic polyester comprising at least one 1,4:3,6-dianhydrohexitol unit (A), at least one alicyclic diol unit (B) other than the 1,4:3,6-dianhydrohexitol units (A), at least one terephthalic acid unit (C), wherein the (A)/[(A)+(B)] molar ratio is at least 0.05 and at most 0.30, said polyester not containing any aliphatic non-cyclic diol units, and the reduced solution viscosity (25°C; phenol (50%m): ortho-dichlorobenzene (50%m); 5 g/l of polyester) of said polyester being greater than 50 ml/g.
